# EUROPEAN PATENT SPECIFICATION

(11) **EP 1 882 418 B1**
(45) Date of publication and mention of the grant of the patent: **04.11.2009**
(21) Application number: 07112433.3
(22) Date of filing: 13.07.2007
(51) Int. Cl.: A23G 9/36, A23G 9/32

(54) **Aerated frozen confectionery product**
Durchlüftete und gefrorene Süßware
Produit de confiserie surgelé aéré

(30) Priority: 27.07.2006 EP 06117998
(43) Date of publication of application: 30.01.2008
(73) Proprietor: Unilever PLC, London EC4Y 0DY (GB); Unilever N.V., 3013 AL Rotterdam (NL)
(72) Inventor: Turan, Susan, Margaret, Bedford, Bedfordshire MK44 1LQ (GB); Underdown, Jeffrey, Bedford, Bedfordshire MK44 1LQ (GB)
(74) Representative: Clarke, Christopher John

(56) References cited:
- EP-A2- 1 430 785
- WO-A-00/49883
- WO-A-99/37164
- WO-A2-93/02567
- WO-A2-98/09534
- US-A1- 2002 015 756

## Description

The present invention relates to low fat, dairy frozen confections, such as ice cream, comprising probiotic bacteria and having improved quality.

### Background to the invention

An optimal balance of microbial organisms in the intestine is suggested to be an important aspect of maintaining good health. Certain bacteria, such as lactobacilli and bifidobacteria that help to maintain such a favourable balance are considered to be probiotics. Probiotic bacteria are widely used in chilled dairy products such as yoghurt. Whilst attempts have been made to produce frozen dairy products, such as ice cream, which contain probiotics, problems have been encountered with bacterial viability and/or product quality. Since, unlike yoghurt which is purchased and consumed within a relatively short period after manufacture, ice cream is often stored for many months prior to sale and consumption, the long term survival of probiotics in ice cream is also a consideration since the product needs to deliver a sufficient dose of bacteria at the point of consumption. Consequently, significant losses of viable bacteria over several weeks or months need to be avoided.

Generally, since probiotic dairy products are intended to be part of a healthy lifestyle, they are low in fat. However, it is even more difficult to produce a good quality ice cream with low fat content.

US Patent No. 6,399,124 describes a frozen dessert that contains lactobacilli. However, it was found that to retain acceptable counts of viable bacteria, the temperature at the outlet of the ice cream freezer (dasher) is important. US Patent No. 6,399,124 states that the yields are much higher if the ice cream is cooled down to -3°C than if it is cooled to a more usual temperature of -6°C. In other words, the lower the temperature at the outlet of the ice cream freezer, the few bacteria survive the freezing process. Unfortunately, the use of higher temperatures to increase bacterial survival also lowers product quality.

WO 0049883, US 20020015756 and EP 1430785 describe frozen dairy products comprising probiotics.

WO 9937164 describes frozen food products with a low fat content and small ice crystal size, and a process for the manufacture of it.

There is therefore a need for low fat probiotic frozen confectionery products that have both good bacterial counts, especially after prolonged storage, and good product quality, such as small ice crystal size.

### Summary of the invention

One technique that has been used to increase the quality of ice cream, particularly low fat ice cream, is a process termed 'cold extrusion' (see for example WO98/09534). In this process, ice cream produced in the ice cream freezer is fed into an extruder which contains a screw and which is cooled to a temperature of from about -9°C to -16°C. The resulting product has a much finer structure with smaller ice crystals than a corresponding product made by conventional routes. However, we expected that such a process would not be suitable for use with probiotics because the much lower temperatures would result in unacceptable loss of bacteria. Surprisingly, we have found that a low temperature process can be used to obtain a product have both good product quality and acceptable bacterial counts provided that the mechanical stress to which the product is subjected during freezing is kept within particular limits. If the mechanical stress is too high, significant bacterial losses occur. However if the mechanical stress is too low, the process does not achieve the desired product quality.

Accordingly, the present invention provides an aerated frozen confectionery product having at least 3 wt% milk solids non fat and 6 wt% or less fat which product comprises at least 10⁷ colony forming units of probiotic bacteria per gram of product and has a mean ice crystal size of less than 55 µm and/or a mean air cell size of less than 50 µm.

Preferably the product comprises at least 5 x 10⁶ colony forming units of probiotic bacteria per gram of product after storage at -18°C for 2 weeks.

Preferably at least 75% of the probiotic bacteria are bifidobacteria.

In one embodiment, the product comprises yoghurt.

The present invention also provides a method of producing an aerated frozen confectionery product having at least 3 wt% milk solids non fat and 6 wt% or less fat, which method comprises freezing a premix for said frozen product comprising probiotic bacteria and extruding the resulting product at a temperature of less than -8°C, preferably from -9°C to -16°C, wherein the mechanical stress exerted on the frozen product during freezing and extrusion is less than 25,000 Pa/m².

Preferably the premix is frozen in a surface scraped heat exchanger and then the resulting product is fed into an extruder comprising an extruding screw, wherein the mechanical stress exerted by the extruder on the cooled product is from 10,000 to less than 25,000 Pa/m², more preferably from 16,000 to 22,000 Pa/m².

Preferably the extruding screw has a pitch angle of from 28 to 45 degrees.

Preferably at least 75% of the probiotic bacteria are bifidobacteria.

In one embodiment, the product comprises yoghurt.

In a preferred embodiment, the premix comprises less than 5 x 10⁸ colony forming units of probiotic bacteria per gram of premix.

In a related aspect, the present invention provides an aerated frozen confectionery product having at least 3 wt% milk solids non fat and 6 wt% or less fat obtained or obtainable by the method of any one of claims 9 to 16, which product comprises at least 10⁷ colony forming units per gram (cfu/g) of product of probiotic bacteria and has a mean ice crystal size of less than 55 µm and/or a mean air cell size of less than 50 µm.

Preferably the product comprises at least 5 x 10⁶ colony forming units of probiotic bacteria per gram of product after storage at -18°C for 2 weeks.

### Detailed description of the invention

Unless defined otherwise, all technical and scientific terms used herein have the same meaning as commonly understood by one of ordinary skill in the art (e.g. in chilled confectionery/frozen confectionery manufacture, and chemistry). Definitions and descriptions of various terms and techniques used in chilled/frozen confectionery manufacture are found in Ice Cream, 4th Edition, Arbuckle (1986), Van Nostrand Reinhold Company, New York, NY.

The present invention will now be further described with reference to the following examples, which are illustrative only and non-limiting.

### EXAMPLES

### Materials and Methods

**Table 1 - Recipes**

| | Recipe 1 | Recipe 2 | Recipe 3 |
|---|---|---|---|
| **Ingredient** | **% w/w** | **% w/w** | **% w/w** |
| Palm oil | 4.0 | 4.0 | 4.0 |
| Skimmed milk powder | 5.0 | 3.7 | 2.375 |
| Concentrated whey Avonol 600 | 5.0 | 3.7 | 2.375 |
| HP 60 Emulsifier | 0.18 | 0.18 | 0.18 |
| Guar gum | 0.11 | 0.11 | 0.11 |
| Carrageenan L100 | 0.035 | 0.035 | 0.035 |
| Locust bean gum | 0.25 | 0.25 | 0.25 |
| Sucrose | 5.8 | 5.8 | 5.8 |
| Dextrose monohydrate | 5.8 | 5.8 | 5.8 |
| Fructose | 3.4 | 3.4 | 3.4 |
| Oligofructose | 4.0 | 4.0 | 4.0 |
| Water | 66.425 | 44.025 | 21.675 |
| Yoghurt | 0 | 25 | 50 |

### Process conditions

### mix manufacture:

In a jacketed 500 litre mix tank, water is added at 85°C, then milk ingredients, sugar, stabilizers, emulsifier, fat are added and mixed with high shear mixer. The premix is heated with a plate heat exchanger to 83°C and homogenized with a Crepaco single stage valve homogeniser at either 150 or 300 bar. After holding at 83°C for 15 seconds the mix is cooled with a plate heat exchanger to 5°C. The mix was held at this temperature for at least two hours prior to freezing. Immediately prior to freezing, the probiotic culture (supplied as either freeze dried or DVS (direct vat set) frozen pellets) was then added and mixed well.

### Freezing process:

The aged mix was processed through an ice cream freezer (Crepaco W04 freezer with a series 30 dasher operating at 4 bar barrel pressure). Ice cream was produced at a mix throughput of 200 l/hr at 100% overrun with an extrusion temperature of -7.0°C. The outlet of the freezer was connected to a single screw extruder (SSE) (as described in WO98/09534) and operated at an inlet pressure of 7 bar and at a range of torque set points from 600Nm to 1250Nm.

Calculation of shear stress and viscosity of the ice cream within a screw channel are based on the assumption that the system is, or can be described as, wide gap concentric cylinders of the screw body inside the barrel

Shear stress = τ =M_{d}/2Br²L where:

| | |
|---|---|
| Md | torque (Nm) |
| r | radius of rotor to bottom of channel (m) |
| L | length of screw (m) |

Shear rate = 2Σ/n(1-b^{2/n}) where

| | |
|---|---|
| Σ | angular velocity of the inner cylinder (screw) |
| n | power law index of the material (taken as 0.5) |
| b | ratio of the inner to outer radius (radius of screw/radius of barrel) |

### Standard storage

Samples taken directly from the blast freezer after 2 hrs and placed in the -25°C cold store for the 24 week storage time. Viability of initial mix, freshly produced and stored ice cream shown below, expressed as absolute count (cfu/g) and % loss compared to unfrozen mix.

### Sample preparation for LTSEM:

The microstructure of ice cream samples was visualized by Low Temperature Scanning Electron Microscopy (LTSEM). All samples were stored at -80°C prior to structural analysis. The samples were prepared using the Oxford instruments CT1500HF preparation equipment attached to the microscope. A sample at -80°C of size 5 x 5 x 10mm was taken from the ice cream block. This sample was mounted onto an aluminium stub using a Tissue Tek : OCT ™ compound (PVA 11%, Carbowax 5% and 85% non-reactive components) on the point of freezing.

The sample including the holder was plunged into liquid nitrogen slush and transferred to a low temperature preparation chamber: *Oxford Instrument CT1500HF .* The chamber is under vacuum, approximately 10⁻⁴ bar, and the sample is warmed up to -90 °C. Ice is slowly etched to reveal surface details not caused by the ice itself, so water is removed at this temperature under constant vacuum for 60 to 90 seconds. Once etched, the sample is cooled to -110°C ending up the sublimation, and coated with gold using argon plasma. This process also takes place under vacuum with an applied pressure of 10⁻¹ millibars and current of 6 milliamps for 45 seconds. The sample is then transferred to a conventional Scanning Electron Microscope (JSM 5600), fitted with an Oxford Instruments cold stage at a temperature of -160°C. The sample is examined and areas of interest captured via digital image acquisition software.

### Gas Cell and Ice Crystal Sizing Method

The gas structure in ice cream was quantified by measuring the gas cell size distribution from SEM micrographs using the AnalySIS 2.11 - package AUTO (SIS Munster, Germany) with 'B' version software. The AnalySIS programme was run using digital data direct from the JSM 5600 microscope. The optimum magnification was such that there were less than 300 gas cells per image. The programme was used manually by drawing around particle boundaries. The distribution was analysed using the maximum diameter parameter. All gas cells present on an SEM micrograph were counted and up to six SEM images were used. Generally, at least 300 gas cells were counted. The average size was determined as the number average, d(1,0), of the individual cell sizes. Ice crystals were also sized from SEM micrographs in a similar manner.

### Example 1

Prior to freezing, the probiotic bacteria were added to each mix at +5°C in the form of frozen pellets such that the starting concentration of bacteria was 1.0 x 10⁸ per gram of mix in all cases.

Each mix containing the probiotic bacteria was processed through a Crepaco W04 ice cream freezer and then through a single screw extruder (described in WO98/09534).

The Crepaco freezer was operated such that overrun ex-freezer was about 100% and the temperature at extrusion about -6°C to -7°C (typical for this type of formulation).

The single screw extruder was operated with three torque set points of 750 Nm, 1000 Nm & 1250 Nm (corresponding to a calculated shear stress of 21000, 28000 & 35000 Pa respectively). This resulted in extrusion temperatures after the screw extruder in the range -10°C to -12°C.

Samples of the frozen aerated confection were taken immediately after passing through the Crepaco freezer and after passing through the Crepaco freezer followed by the single screw extruder.

The samples were stored at -25°C for 24 weeks after which the levels of probiotic bacteria were measured.

The air cell sizes and ice crystal sizes were measured, as described above on selected samples after a minimum storage time of 24 weeks at -25°C.

### Results and Discussion

Table 1 gives the recipes used to exemplify the invention. Recipe 1 is a typical low fat ice cream formulation containing 4% fat and 10% MSNF.

Recipes 2 and 3 are essentially the same but with some of the MSNF and water replaced by 25% and 50% yoghurt respectively.

**Table 2 - Mean air cell & ice crystal sizes (microns)**

| **Process** | Recipe 1 |
|---|---|
| Freezer mean air cell size | 93 |
| Freezer mean ice crystal size | 55 |
| SSHE(750Nm) mean air cell size | 31 |
| SSHE(750Nm)mean ice crystal size | 45 |
| SSHE(1000Nm) mean air cell size | 37 |
| SSHE(1000Nm) mean ice crystal size | 48 |

### Air cell & ice crystal sizes

Table 2 gives the measured mean air cell sizes and ice crystal sizes for the frozen aerated confections produced using Recipe 1.

These results show that the mean air cell and mean ice crystal sizes are much smaller when processed through the combination of Crepaco freezer and the single screw extruder compared with the Crepaco freezer alone.

The values for the mean air cell size and mean ice crystal size of 93 micron and 55 micron respectively are typical for a low fat formulation of this type when processed through a Crepaco freezer operating under standard conditions.

The additional processing step of single screw extrusion significantly reduces the mean air cell size and the mean ice crystal size.

The values for these parameters at the lowest torque setting used (750 Nm) were mean air cell size 31 micron and mean ice crystal size 45 micron.

An informal taste panel considered the low torque SSE sample to be significantly thicker, creamier and less cold eating than the equivalent sample processed using the Crepaco freezer alone.

### Conclusion

Low torque SSE processing produces an aerated frozen confection with significantly smaller air cells and ice crystals compared to the equivalent product processed through a standard ice cream freezer alone.

This finer microstructure results in a product that is thicker, creamier and less cold eating than a conventionally frozen low fat product.

### Probiotic viability

Table 3 gives the levels of probiotic bacteria measured after 24 weeks storage at - 25°C compared with the initial starting concentrations of 1.0 x 10⁸ per gram of mix.

The data are given for the three recipes used and for four different processing regimes.
(1) Crepaco freezer alone
(2) Crepaco freezer followed by SSE operating at torque set point 750 Nm
(3) Crepaco freezer followed by SSE operating at torque set point 1000 Nm
(4) Crepaco freezer followed by SSE operating at torque set point 1250 Nm

**Table 3 - Probiotic viability after frozen storage**

| **Process** | Recipe 1 | Recipe 2 | Recipe 3 | Extrusion Temp (°C) |
|---|---|---|---|---|
| Freezer T = 0 Count | 1.00 x 10⁸ | 1.00 x 10⁸ | 1.00 x 10⁸ | -6.7/-6.7/-6.5 |
| Freezer T = 24w Count | 9.90 x 10⁷ | 9.40 x 10⁷ | 7.53 x 10⁷ | |
| | **(1%)** | **(6%)** | **(25%)** | |
| SSHE (750Nm) T = 0 Count | 1.00 x 10⁸ | 1.00 x 10⁸ | 1.00 x 10⁸ | -10.1/-10.2/-10.3 |
| SSHE (750Nm) T = 24w Count | 7.97 x 10⁷ | 8.33 x 10⁷ | 7.07 x 10⁷ | |
| | **(20%)** | **(17%)** | **(29%)** | |
| SSHE(1000Nm) T = 0 Count | 1.00 x 10⁸ | 1.00 x 10⁸ | 1.00 x 10⁸ | -11.2/-11.1/-10.9 |
| SSHE(1000Nm) T = 24w Count | 3.90 x 10⁷ | 8.23 x 10⁷ | 5.70 x 10⁷ | |
| | **(61%)** | **(18%)** | **(43%)** | |
| SSHE (1250Nm) T = 0 Count | 1.00 x 10⁸ | 1.00 x 10⁸ | 1.00 x 10⁸ | -11.7/-11.6/-10.9 |
| SSHE (1250Nm) T = 24w Count | 4.43 x 10⁷ | 5.70 x 10⁷ | 4.37 x 10⁷ | |
| | **(56%)** | **(43%)** | **(56%)** | |

In all cases the probiotic bacteria levels were lower in the stored frozen samples compared to the equivalent fresh mix. The figures in parentheses give the % losses after frozen storage relative to the starting concentration in the mix.

It is seen that there are no systematic trends in losses with increasing yoghurt levels in the mix. In contrast however, there are systematic trends as a consequence of the method of processing.

The lowest losses occur when the Crepaco freezer alone is used. However, such a product also has the lowest product quality, as determined by air cell and ice crystal size and sensory panel. Losses increase when processed through the single screw extruder. In general, as the torque set point is increased the level of losses also increases. Nonetheless, if the shear stress exerted by the SSE is limited to no more than 25000 Pa, then losses can be kept below one third, which is acceptable, whilst retaining good product microstructure.

### Summary

| | | |
|---|---|---|
| Standard freezer: | Good viability | Poor microstructure |
| Low torque SSE: | Acceptable viability | Good microstructure |
| High torque SSE | Poor viability | Good microstructure |

### Conclusion

SSE can be used to produce a low fat probiotic ice cream having both good product microstructure (and therefore quality to the consumer) whilst also having good levels of probiotic bacteria. However, to keep probiotic losses to an acceptable level during the freezing process (e.g. under one third) the maximum shear stress exerted by the SSE should be limited to no more than around 25000 Pa.

The various features and embodiments of the present invention, referred to in individual sections above apply, as appropriate, to other sections, *mutatis mutandis.* Consequently features specified in one section may be combined with features specified in other sections, as appropriate.

## Claims

1. An aerated frozen confectionery product having at least 3 wt% milk solids non fat and 6 wt% or less fat which product comprises at least 10⁷ colony forming units of probiotic bacteria per gram of product and has a mean ice crystal size of less than 55 µm.

2. A product according to claim 1 wherein the product comprises at least 5 x 10⁶ colony forming units of probiotic bacteria per gram of product after storage at -18°C for 2 weeks.

3. A product according to claim 1 or claim 2 which has a mean air cell size of less than 50 µm.

4. A product according to any one of the preceding claims which comprises yoghurt.

5. A product according to any one of the preceding claims wherein at least 75% of the probiotic bacteria are bifidobacteria.

6. A method of producing an aerated frozen confectionery product having at least 3 wt% milk solids non fat and 6 wt% or less fat, which method comprises freezing a premix for said frozen product comprising probiotic bacteria and extruding the resulting product at a temperature of less than -8°C, wherein the mechanical stress exerted on the frozen product during freezing and extrusion is less than 25,000 Pa/m².

7. A method according to claim 6 where the premix is frozen in a surface scraped heat exchanger and then the resulting product is fed into an extruder comprising an extruding screw, wherein the mechanical stress exerted by the extruder on the cooled product is from 10,000 to less than 25,000 Pa/m².

8. A method according to claim 7 wherein the mechanical stress exerted by the extruder on the frozen product is from 16,000 to 22,000 Pa/m².

9. A method according to claim 7 or 8 wherein the extruding screw has a pitch angle of from 28 to 45 degrees.

10. A method according to any one of claims 6 to 9 wherein the product comprises yoghurt.

11. A method according to any one of claims 6 to 10 wherein at least 75% of the probiotic bacteria are bifidobacteria.

12. A method according to any one of claims 6 to 11 wherein the premix comprises less than 5 x 10⁸ colony forming units of probiotic bacteria per gram of premix.

## Patentansprüche

1. Durchlüftetes gefrorenes Süßwarenprodukt, das wenigstens 3 Gewichts-% Nicht-Fett-Milchfeststoffe und 6 Gewichts-% oder weniger Fett hat, wobei das Produkt wenigstens 10⁷ Kolonien bildende Einheiten von probiotischen Bakterien pro Gramm Produkt umfasst und eine mittlere Eiskristallgröße von kleiner als 55 µm hat.

2. Produkt gemäß Anspruch 1, wobei das Produkt wenigstens 5 x 10⁶ Kolonien bildende Einheiten von probiotischen Bakterien pro Gramm Produkt nach Lagerung bei -18 °C für 2 Wochen umfasst.

3. Produkt gemäß Anspruch 1 oder Anspruch 2, das eine mittlere Luftzellengröße von kleiner als 50 µm hat.

4. Produkt gemäß einem der vorangehenden Ansprüche, das Jogurt umfasst.

5. Produkt gemäß einem der vorangehenden Ansprüche, wobei wenigstens 75 % der probiotischen Bakterien Bifidobakterien sind.

6. Verfahren zur Herstellung eines durchlüfteten gefrorenen Süßwarenprodukts, das wenigstens 3 Gewichts-% Nicht-Fett-Milchfeststoffe und 6 Gewichts-% oder weniger Fett hat, wobei das Verfahren Gefrieren einer Vormischung für das gefrorene Produkt, umfassend probiotische Bakterien, und Extrudieren des resultierenden Produkts bei einer Temperatur von weniger als -8 °C umfasst, wobei die mechanische Beanspruchung, die auf das gefrorene Produkt während des Gefrierens und der Extrusion ausgeübt wird, weniger als 25 000 Pa/m² ist.

7. Verfahren gemäß Anspruch 6, wobei die Vormischung in einem Kratzwärmeaustauscher gefroren wird und das resultierende Produkt dann in einen Extruder geführt wird, der eine Extrudierschnecke umfasst, wobei die mechanische Beanspruchung, die durch den Extruder auf das gekühlte Produkt ausgeübt wird, von
10 000 bis weniger als 25 000 Pa/m² ist.

8. Verfahren gemäß Anspruch 7, wobei die mechanische Beanspruchung, die durch den Extruder auf das gefrorene Produkt ausgeübt wird, von 16 000 bis 22 000 Pa/m² ist.

9. Verfahren gemäß Anspruch 7 oder 8, wobei die Extrudierschnecke einen Steigungswinkel von 28 bis 45 Grad hat.

10. Verfahren gemäß einem der Ansprüche 6 bis 9, wobei das Produkt Jogurt umfasst.

11. Verfahren gemäß einem der Ansprüche 6 bis 10, wobei wenigstens 75 % der probiotischen Bakterien Bifidobakterien sind.

12. Verfahren gemäß einem der Ansprüche 6 bis 11, wobei die Vormischung weniger als 5 x 10⁸ Kolonien bildende Einheiten von probiotischen Bakterien pro Gramm Vormischung umfasst.

## Revendications

1. Produit de confiserie congelé aéré ayant au moins 3 % en poids de matières solides non grasses du lait et 6 % en poids ou moins de matières grasses, ledit produit comprenant au moins 10⁷ unités formant colonie de bactéries probiotiques par gramme de produit, et ayant une taille moyenne de cristaux de glace inférieure à 55 µm.

2. Produit selon la revendication 1, le produit comprenant au moins 5 x 10⁶ unités formant colonie de bactéries probiotiques par gramme de produit après stockage à -18°C pendant 2 semaines.

3. Produit selon la revendication 1 ou la revendication 2, qui a une taille moyenne d'alvéole inférieure à 50 µm.

4. Produit selon l'une quelconque des revendications précédentes, qui comprend du yogourt.

5. Produit selon l'une quelconque des revendications précédentes, dans lequel au moins 75 % des bactéries probiotiques sont des bifidobactéries.

6. Méthode de production d'un produit de confiserie congelé aéré ayant au moins 3 % en poids de matières solides non grasses du lait et 6 % en poids de matières grasses, ledit procédé comprenant la congélation d'un prémélange dudit produit congelé comprenant des bactéries probiotiques et l'extrusion du produit obtenu à une température inférieure à -8°C, dans laquelle la contrainte mécanique exercée sur le produit congelé pendant la congélation et l'extrusion est inférieure à 25 000 Pa/m².

7. Méthode selon la revendication 6, dans laquelle le prémélange est congelé dans un échangeur thermique à surface raclée puis, le produit obtenu est acheminé dans une extrudeuse comprenant une vis d'extrusion, la contrainte mécanique exercée par l'extrudeuse sur le produit refroidi étant de 10 000 à 25 000 Pa/m².

8. Méthode selon la revendication 7, dans laquelle la contrainte mécanique exercée par l'extrudeuse sur le produit congelé est de 16 000 à inférieur à 22 000 Pa/m².

9. Méthode selon la revendication 7 ou 8, dans laquelle la vis d'extrusion a un angle d'hélice de 28 à 45 degrés.

10. Méthode selon l'une quelconque des revendications 6 à 9 dans laquelle le produit comprend du yogourt.

11. Méthode selon l'une quelconque des revendications 6 à 10, dans laquelle au moins 75 % des bactéries probiotiques sont des bifidobactéries.

12. Méthode selon l'une quelconque des revendications 6 à 11, dans laquelle le prémélange comprend moins de 5 x 10⁸ unités formant colonie de bactéries probiotiques par gramme de prémélange.
